# EUROPÄISCHE PATENTANMELDUNG

(11) **EP 0 626 127 A1**
(43) Veröffentlichungstag der Anmeldung: **30.11.1994**
(21) Anmeldenummer: 94107184.7
(22) Anmeldetag: 07.05.1994
(51) Int. Cl.: A01C 7/12

(54) **Sämaschine**

(30) Priorität: 26.05.1993 DE 4317404
(71) Anmelder: Amazonen-Werke H. Dreyer GmbH & Co. KG, D-49205 Hasbergen (DE)
(72) Erfinder: Pfisterer, Thomas, D-66386 St. Ingbert (DE); Klein, Laurent, F-57350 Soicheren (FR)

(57) **Zusammenfassung**

Sämaschine mit Vorratsbehälter, einer Dosierwelle (6), auf welcher Dosierräder (7) oder Dosierwalzen (8) mit Dosiernocken (9) angeordnet sind. Um die Ausgestaltung der Dosierorgane wesentlich zu vereinfachen und preiswerter zu gestalten, ist vorgesehen, daß die Dosierräder (7) und/oder Dosierwalzen (8) in einem die Dosierräder (7) und/oder Dosierwalze (8) zumindest nach unten und dem Vorratsbehälterraum abgewandten Seite etwa winkelförmig zueinander angeordneten Wände (19) umschließenden Raum angeordnet sind, und daß in der aufrechten Wand (19) der winkelförmig zueinander angeordneten Wände (19) senkrechte Schlitze (20) angeordnet sind, und daß in diese Schlitze (20) die Dosiernocken (9) fassen.

## Beschreibung

Die Erfindung betrifft eine Sämaschine mit Vorratsbehälter, einer Dosierwelle, auf welcher Dosierräder oder Dosierwalzen mit Dosiernocken angeordnet sind.

Derartige Sämaschinen sind durch die DE-OS 39 30 080 bekannt. Bei diesen Sämaschinen weisen Vorratsbehälter mit in ihrem unteren Bereich angeordneten Auslauföffnungen auf, vor denen in einzelnen Dosiergehäusen Dosierräder mit Dosiernocken angeordnet sind. Diese Dosierräder sind auf einer Dosierwelle angeordnet und werden über ein Regelgetriebe von einer Kraftquelle angetrieben. Über die Drehzahl der Dosierräder läßt sich die Ausbringmenge einstellen.

Nachteilig ist bei dieser bekannten Anordnung der Dosierräder in einzelnen Sägehäusen, daS die Ausgestaltung der aus Doserrädern, Sägehäusen und beweglichen Bodenklappen bestehenden Dosierorgane sehr aufwendig ist.

Der Erfindung liegt die Aufgabe zugrunde, die Ausgestaltung der Dosierorgane wesentlich zu vereinfachen und preiswerter zu gestalten.

Diese Aufgabe wird erfindungsgemäß durch die kennzeichnenden Merkmale des Patentanspruches 1 gelöst. Infolge dieser Maßnahmen ergibt sich ein äußerst einfaches Dosierorgan, welches aus Dosierrädern bzw. Dosierwalzen, die jeweils Dosiernocken aufweisen und durch die sich in der die Dosierräder bzw. -walzen in ihrem unteren Bereich umschließenden Wand befindlichen Schlitze das Material nach außen fördert. Es sind also keine einzelnen Sägehäuse erforderlich.

Mit anderen Worten ausgedrückt,es werden also im unteren Bereich des Vorratsbehälter die Dosierräder oder die Dosierwalzen angeordnet und in ihrem oberen Bereich durch ein Leitelement abgedeckt. Die Dosierwalzen oder Dosierräder fördern mit ihren Nocken, daß sich im Vorratsbehälter befindliche Gut einfach durch die sich in der Vorratsbehälterwand befindlichen aufrechten Schlitze.

Weitere Einzelheiten der Erfindung sind der Beispielsbeschreibung und den Zeichnungen zu entnehmen. Hierbei zeigen
- Fig. 1: die auf eine Bodenbearbeitungskombination aufgebaute Sämaschine in Seitenansicht,

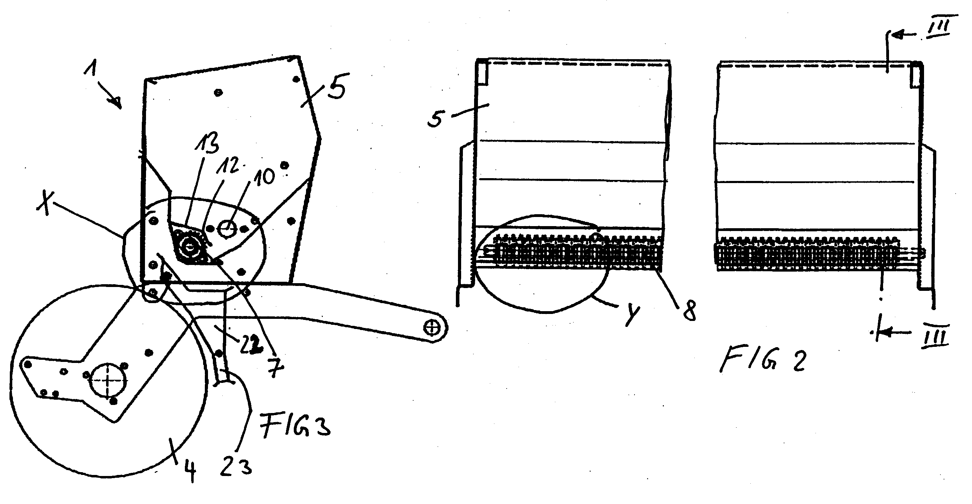

- Fig. 2: die Sämaschine in der Ansicht von hinten in verkleinertem Maßstab,

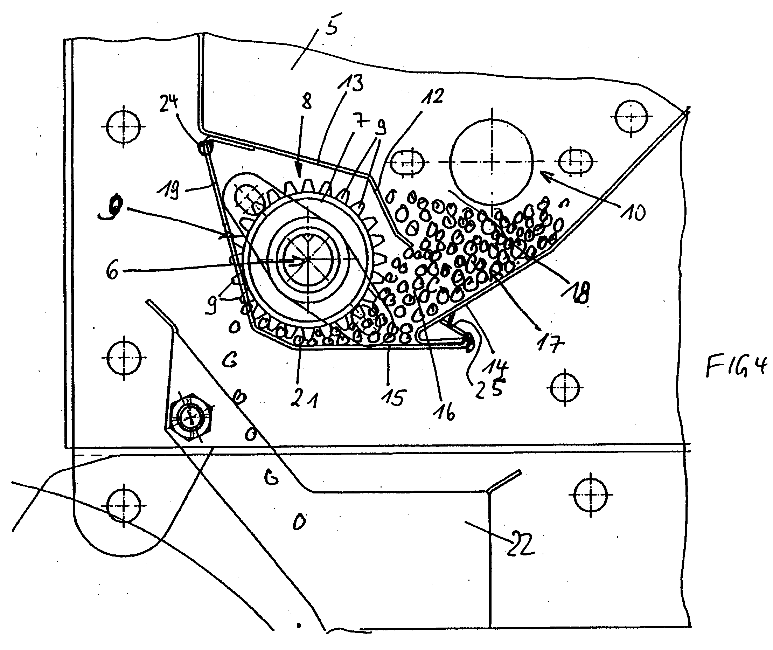

- Fig. 3: die Ansicht der Sämaschine in der Ansicht III - III, aufgebaut auf der Nachlaufwalze,

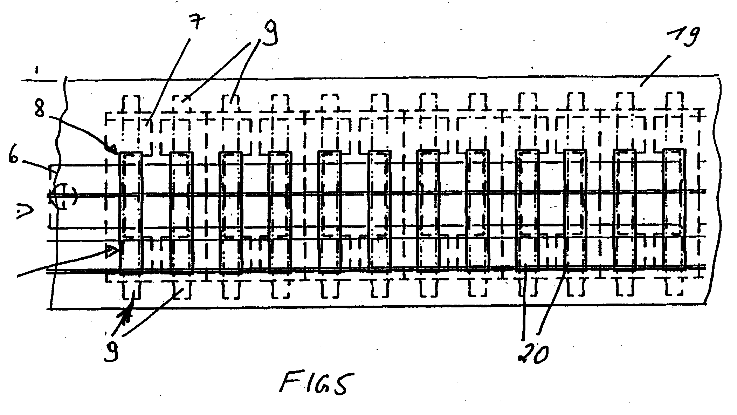

- Fig. 4: der untere Bereich des Vorratsbehälters mit dem Dosierorgan entsprechend der Einzelheit X im vergrößerten Maßstab und
- Fig. 5: die Ausbildung des Dosierorgans gemäß Einzelheit Y im vergrößerten Maßstab.

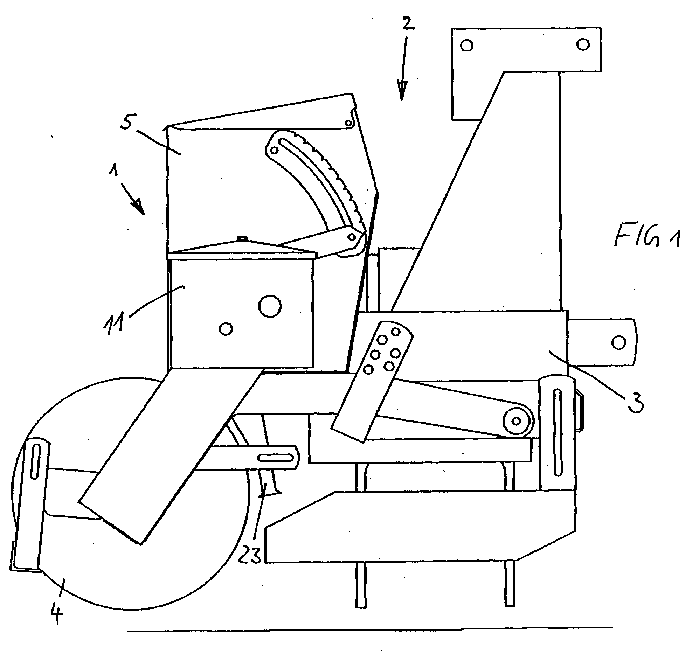

Die Sämaschine 1 gemäß Ausführungsbeispiel ist Bestandteil der in Fig. 1 dargestellten Grassäkombination 2, die aus dem Bodenbearbeitungsgerät 3, der Nachlaufwalze 4 und der Sämaschine 1 besteht. Die Sämaschine 1 weist den Vorratsbehälter 5, die Dosierwelle 6, die nebeneinander angeordneten Dosierräder 7, die zusammen eine Dosierwalze 8 bilden, auf. Die Dosierräder 7 weisen die Dosiernocken 9 auf. Die Dosierwalze 8 ist dem unteren Bereich des Vorratsbehälters 5 zugeordnet. In dem Vorratsbehälter 5 befindet sich das auzubringende Saatgut. Oberhalb der Dosierwalze 8 befindet sich im unteren Bereich des Vorratsbehälters 5 die nicht näher dargestellte Rührwelle 10. Die Dosierwelle 6 wird über das Regelgetriebe 11 über einen nicht näher dargestellten Antrieb von der Bodenwalze 4 angetrieben. Oberhalb der Dosierwalze 8 ist das Leitelement 12, welches sich über die gesamte Breite der Dosierwalze 8 bzw. des Vorratsbehälters 5 erstreckt, angeordnet. Dieses Leitelement 12 bildet den Boden 13 bzw. Zwischenboden des Vorratsbehälters 5. Der Vorratsbehälterboden 14 erstreckt sich mit seiner Verlängerung 15 bis unterhalb der Dosierwalze 8 und bildet den Zuführungsbereich 16 des Saatgutes 17 zu der Dosierwalze 8. Auf der dem Vorratsbehälterraum 18 abgewandten Seite der Dosierwalze 8 befindet sich eine aufrecht verlaufende Wand 19. In dieser Wand 19 sind Schlitze 20 angebracht, die eine etwas größere Breite als die Dosiernocken 9 aufweisen. Die Dosiernocken 9 fassen durch diese Schlitze 20. Die die Dosierwalze 8 umschließenden Wände 19 und 21 sind winkelförmig angeordnet. Die Dosierräder 7 bzw. Dosierwalzen 8 und die sich in der Wand 19 befindlichen Schlitze 20 bilden das eitgentliche Dosierorgan. Die Dosiernocken 9 erfassen das sich aus dem Vorratsbehälter 5 der Dosierwalze 8 zugeleitete Saatgut 17 und fördern es in dosierter Weise durch die Schlitze 20. Von hier aus fällt das Saatgut 17 über die Auffangtrichter 22 in die als Särohre 17 ausgebildeten Säelemente, von wo es auf den Boden 24 vor die Nachlaufwalze 4 gelangt. Das Saatgut 17 wird dann von der Walze 4 angedrückt.

Zur Restentleerung des Vorratsbehälters 5 sind die die Dosierräder 7 umschließende Wände 19 und 21 und das Gelenk 24 wegschwenkbar angeordnet. Mittels des schematisch dargestellten Verschlußelementes 25 werden die Wände 19 und 21 in der geschlossenen Position gehalten. Es kann aber auch ein anderer Teil im unteren Bereich der Wände 19 und 21 oder nur eine von innen weggeschwenkt werden. Auch ist es möglich, die unteren Wandbereiche des Vorratsbehälters unterhalb der Dosierräder 7 abnehmbar zu befestigen.

## Patentansprüche

1. Sämaschine mit Vorratsbehälter (5), einer Dosierwelle (6), auf welcher Dosierräder (7) oder Dosierwalzen (8) mit Dosiernocken (9) angeordnet sind, dadurch gekennzeichnet, daß die Dosierräder (7) und/oder Dosierwalzen (8) in einem die Dosierräder (7) und/oder Dosierwalze (8) zumindest nach unten und dem Vorratsbehälterraum (18) abgewandten Seite etwa winkelförmig zueinander angeordneten Wände (19,21) umschließenden Raum angeordnet sind, und daß in der aufrechten Wand (19) der winkelförmig zueinander angeordneten Wände (19,21) senkrechte Schlitze (20) angeordnet sind, und daß in diese Schlitze (20) die Dosiernocken (9) fassen.

2. Sämaschine nach Anspruch 1, dadurch gekennzeichnet, daß die Dosierwelle (6) über ein Regelgetriebe (11) von einer auf dem Boden abrollenden Antriebselement, wie Bodenwalze, Laufrad etc. antreibbar ist.

3. Sämaschine mit Vorratsbehälter (5), einer Dosierwelle (6), auf welcher Dosierräder (7) oder Dosierwalzen (8) mit Dosiernocken (9) angeordnet sind, insbesondere nach Anspruch 1, dadurch gekennzeichnet, daß die Dosierräder (7) und/oder die Dosierwalze (8) im unteren Bereich des Vorratsbehälters (5) angeordnet sind und in ihrem oberen Bereich durch ein Leitelement (12) abgedeckt ist, und daß die Dosiernocken (9) durch in der Vorratsbehälterwand (19) angeordnete Schlitze (20) fassen.

4. Sämaschine nach einem oder mehreren der vorstehenden Ansprüche, dadurch gekennzeichnet, daß zumindest ein Teil der die Dosierräder (7) und/oder -walzen (8) umschließenden Wände (19,21) abnehmbar und/oder wegschwenkbar angeordnet ist.
